# FASCICULE DE BREVET EUROPEEN

(11) **EP 0 432 111 B1**
(45) Date de publication et mention de la délivrance du brevet: **20.07.1994**
(21) Numéro de dépôt: 90830553.5
(22) Date de dépôt: 26.11.1990
(51) Int. Cl.: A47J 31/40, A47J 31/00

(54) **Procédé pour obtenir des boissons chaudes de solution et dispositif pour mettre en oeuvre ledit procédé**
Verfahren zum Brühen heisser Lösungsgetränke und Gerät zur Durchführung dieses Verfahrens
Method for brewing hot drinks using soluble substances and apparatus for carrying out this method

(30) Priorité: 28.11.1989 IT 957089
(43) Date de publication de la demande: 12.06.1991
(73) Titulaire: SPIDEM S.r.l., Pero (Milano) (IT)
(72) Inventeur: Paoletti, Luciano, I-50131 Firenze (IT)
(74) Mandataire: Martini, Lazzaro

(56) Documents cités:
- EP-A- 0 195 750
- FR-A- 1 198 682
- FR-A- 2 074 479
- US-A- 3 045 870
- US-A- 3 421 430

## Description

La présente invention concerne un procédé et un dispositif pour obtenir des boissons chaudes de solution.

Il est connu que ce qu'on appelle le café crème traditionnel, ou cappuccino, est un mélange de deux liquides, l'un à base de café et l'autre à base de lait, éventuellement émulsionné avec de l'air.
Le café crème que l'on consomme dans les bars est obtenu en ajoutant à l'infusion de café express, du lait chaud, éventuellement émulsionné au moyen d'un tube d'amenée de vapeur.

On connaît également des groupes pour émulsionner du lait avec de l'air et de la vapeur d'eau, qui comprennent une chambre dans laquelle débouchent un conduit d'amenée de la vapeur, un conduit d'aspiration du lait et un conduit d'aspiration de l'air. Mais tous ces dispositifs connus nécessitent toujours d'ajouter le lait émulsionné à l'infusion de café qui a été obtenu séparément.
Il est également connu que les distributeurs automatiques de boissons chaudes fournissent des cafés crèmes qui sont obtenus en mélangeant une solution de lait avec une solution de café; le mélange étant obtenu par agitation avec des moyens électromécaniques.

La présente invention a pour but de proposer un procédé et un dispositif qui permette d'obtenir dans une tasse des boissons chaudes de solution telles que du café crème, du café, du chocolat, du lait, du thé, du bouillon et similaires, en utilisant des produits lyophilisés.
Pour le café crème, le liquide de solution est le lait qui peut être utilisé également sous sa forme naturelle.

Il est connu, d'après le document FR-A-2.074.479, un procédé pour la distribution de tasses de boisson à base de café en poudre lyophilisé, lequel consiste à former une dose prédéterminée de café lyophilisé et une dose d'eau froide correspondante, de réchauffer ladite dose d'eau, de dissoudre la dose de café dans la dose d'eau réchauffée, de verser la potion obtenue dans une tasse.

Le même document décrit un dispositif pour mettre en oeuvre ledit procédé, lequel comprend essentiellement des moyens pour doser le café en poudre lyophilisé et des moyens mécaniques pour doser l'eau de solution, des moyens pour chauffer l'eau de solution, une cuve pour dissoudre le café lyophilisé dans l'eau réchauffée, cuve de laquelle la potion de café est versée dans une tasse.

Ce procédé et ce dispositif connus ne permettent pas d'utiliser le lait comme liquide de solution pour obtenir directement le café crème, ni d'utiliser la vapeur d'eau pour réchauffer la solution de café, ni d'émulsionner la potion avec de l'air dans la cuve de solution.

On connaît également, d'après le document EP-A-195.750, un dispositif pour émulsionner du lait avec de l'air destiné à être versé dans une tasse contenant une potion chaude de café, obtenue précédemment et séparément.

Le lait et l'air sont aspirés au moyen de vapeur d'eau sous pression dans deux chambres séparées; le lait aspiré est mélangé avec l'air et ensuite le mélange est envoyé dans une chambre dans laquelle il est émulsionné; le lait émulsionné tombe par gravité à travers une ouverture du fond de ladite chambre d'émulsion.

Ce dispositif connu ne permet pas, par lui-même, d'obtenir directement un café crème avec mousse, mais nécessite l'utilisation d'un deuxième dispositif pour la préparation de la potion de café.

On connaît également, d'après le document FR-A-1.198.682, un appareil pour la distribution de boissons de thé comprenant une réserve d'eau, des moyens pour chauffer cette eau à une température supérieure à celle d'ébullition, un plateau perforé pour contenir les feuilles de thé, des moyens pour régler l'alimentation d'une quantité prédéterminée d'eau surchauffée sur le lit de feuilles de thé, des moyens pour recueillir l'infusion dans une tasse, des moyens pour enlever les feuilles de thé utilisées et pour les remplacer par d'autres feuilles de thé fraîches, des moyens pour ajouter du lait dans la tasse qui recueille l'infusion de thé.

Mais cet appareil ne permet pas lui non plus d'utiliser le lait comme liquide de solution ni de produire de la mousse dans le poste d'infusion.

Les avantages obtenus grâce à l'invention consistent essentiellement dans le fait que le dispositif est de construction économique et fonctionne de manière autonome, c'est-à-dire sans utilisation d'énergie électrique; qu'il opère suivant un cycle rapide, hygiénique et fiable même après un longue période de service.

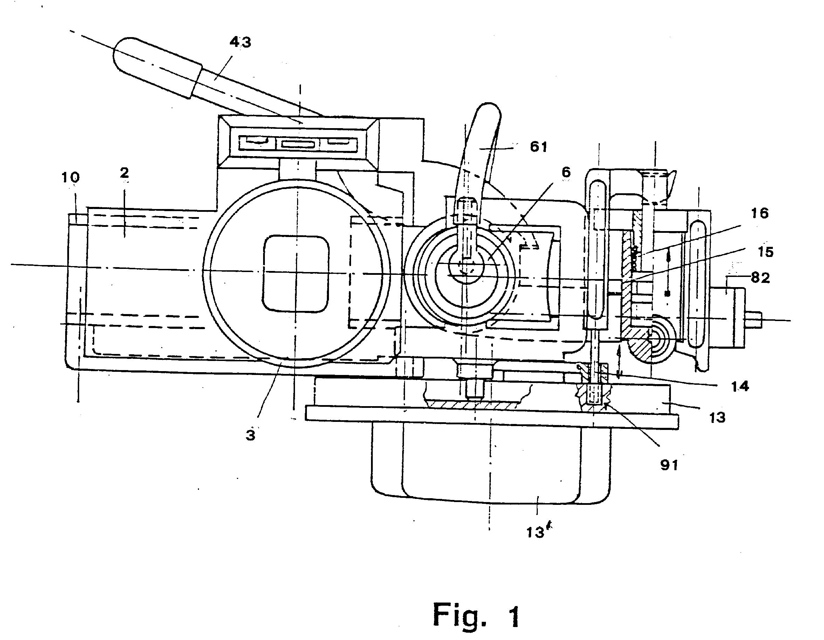

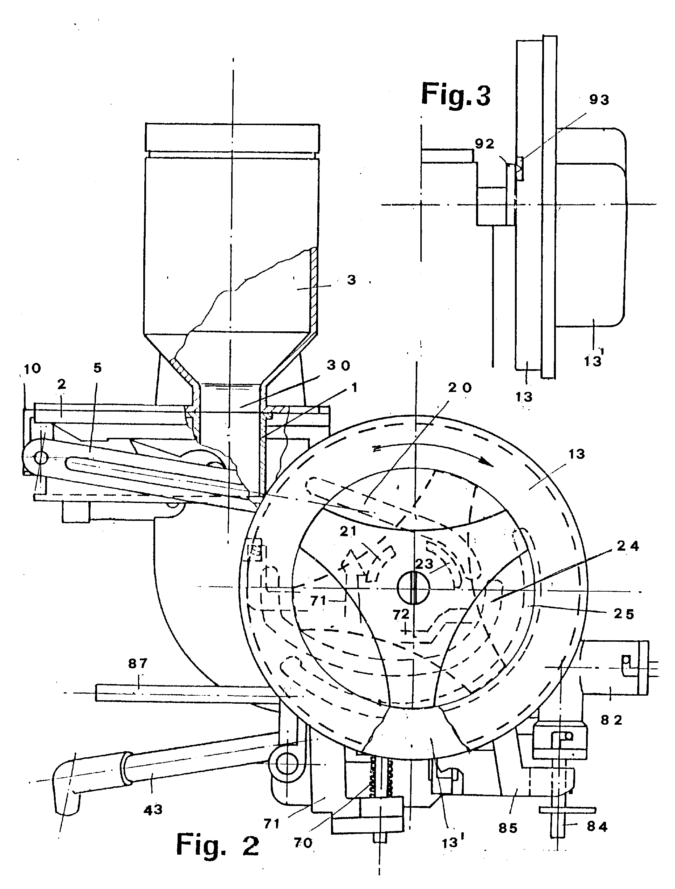

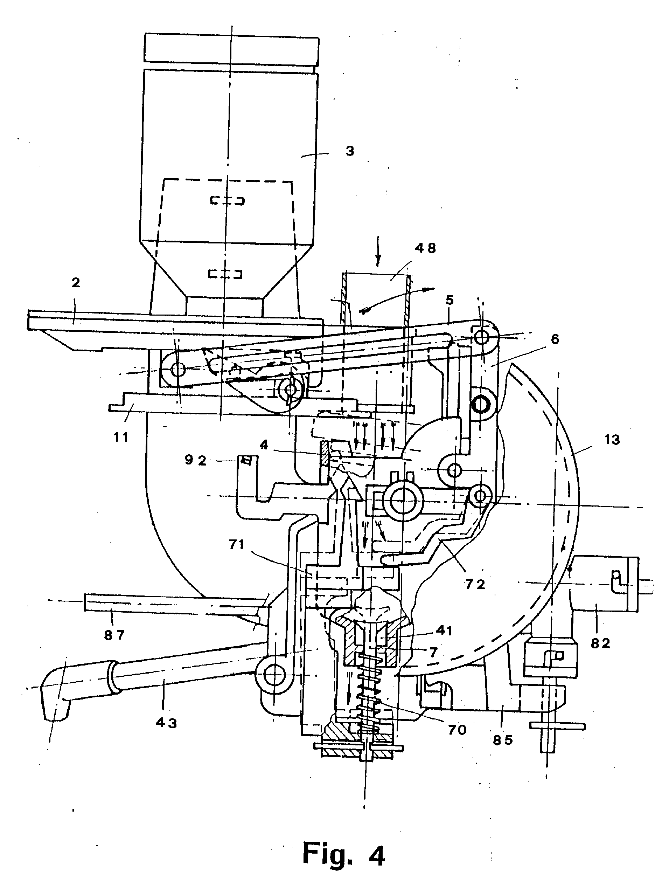

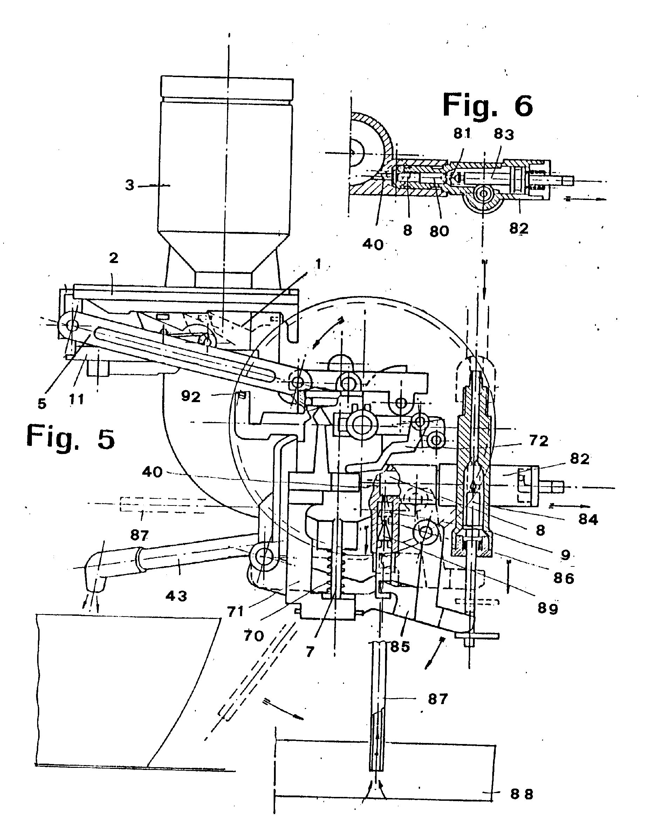

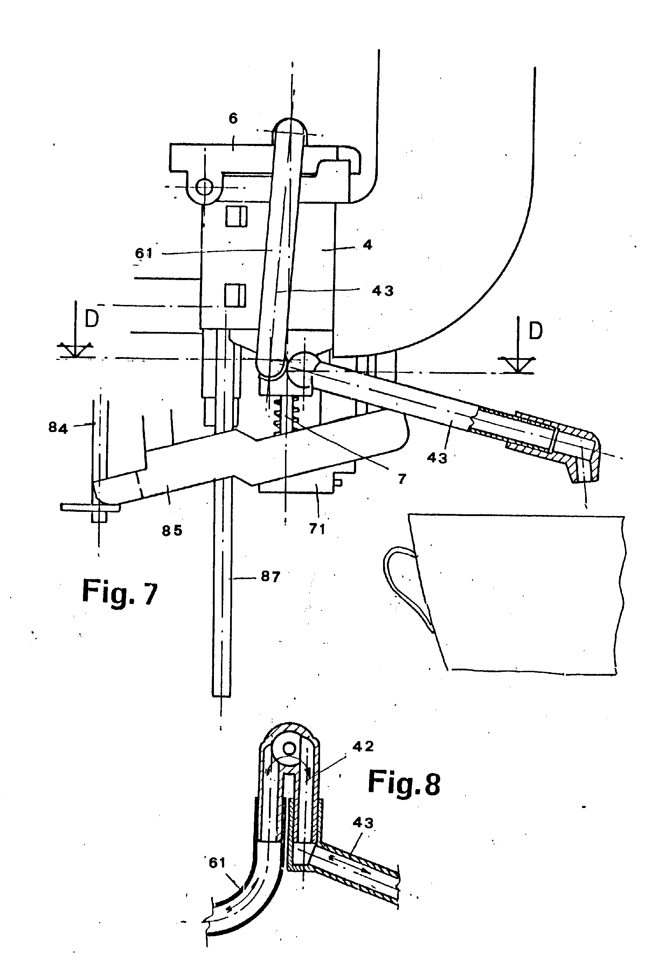

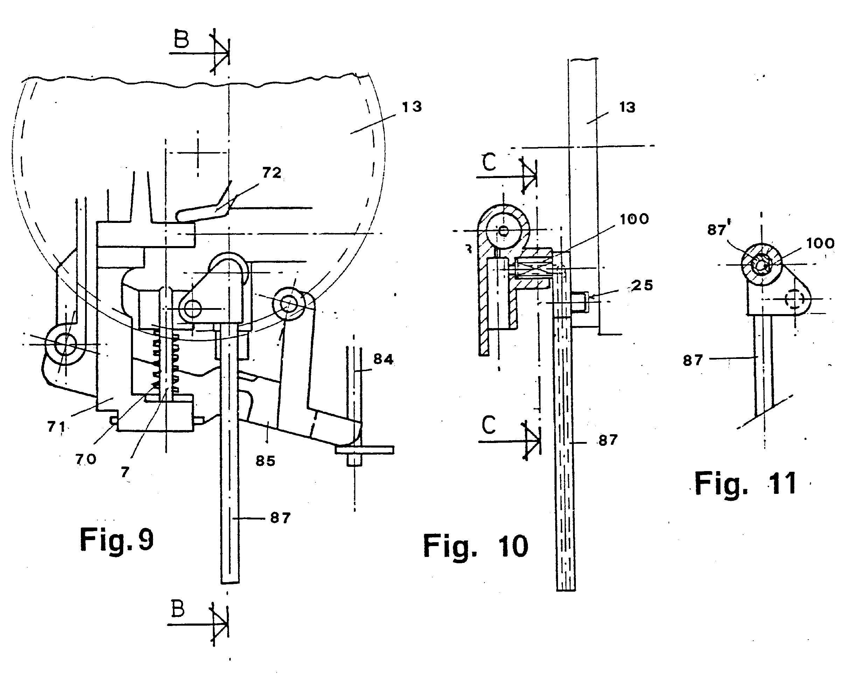

Ces avantages et caractéristiques ainsi que d'autres seront plus et mieux compris de chaque homme du métier à la lumière de la description qui va suivre et à l'aide des dessins annexés donnés à titre d'exemplification pratique de l'invention, mais à ne pas considérer dans le sens limitatif; dessins sur lesquels: - la FIG. 1 représente la vue en plan d'un dispositif pour obtenir des cafés crèmes avec mousse conformément à l'invention, dans la position de début de cycle; - la FIG. 2 représente la vue de face du dispositif de la Fig. 1, dans la position de début et de fin de cycle; - la FIG. 3 représente la vue de côté partielle du dispositif de la Fig. 1, avec le détail du bloc de sécurité; - la FIG. 4 représente la vue de face du cinématisme du dispositif de la Fig. 2, dans la phase de chargement du café dans la chambre de traitement; - la FIG. 5 représente la vue de face du cinématisme du dispositif de la Fig. 2 en coupe partielle, dans la phase de production du café crème avec mousse; - la FIG. 6 représente la vue en coupe détaillée du groupe d'aspiration du lait pour le dispositf de la Fig. 2; - la FIG. 7 représente la vue détaillée de la chambre de traitement pour le dispositif de la Fig. 2; - la FIG. 8 représente la vue en coupe suivant la ligne D-D de la Fig. 7; - la FIG. 9 représente la vue détaillée du conduit d'aspiration du lait en position de fonctionnement; - la FIG. 10 représente la vue en coupe suivant la ligne B-B de la Fig. 9; - la FIG. 11 représente la vue en coupe suivant la ligne C-C de la Fig. 10.

Réduit à sa structure essentielle et en référence aux dessins annexés, le procédé pour obtenir des cafés crèmes avec ou sans mousse, conformément à l'invention, prévoit, dans l'ordre, les phases d'opération suivantes:
- former une dose prédéterminée de café lyophilisé;
- charger la dose de café lyophilisé ainsi formée dans une chambre de traitement située au-dessous;
- fermer ladite chambre de traitement, mais avec possibilité d'entrée de la vapeur d'eau sous pression, du lair et de l'air d'émulsion et de sortie du café crème produit;
- alimenter ladite chambre de traitement avec de la vapeur d'eau sous pression en aspirant le lait destiné à dissoudre et mélanger le café et l'air destiné à émulsionner le lait, pour obtenir le café crème avec mousse;
- recueillir dans une tasse le café crème ainsi formé qui sort de la chambre de traitement;
- interrompre l'alimentation de la vapeur d'eau sous pression et ainsi interrompre aussi l'aspiration du lait et de l'air;
- vider la chambre de traitement dans ladite tasse de réception du café crème.

Avantageusement, conformément à l'invention, il est prévu que la dose prédéterminée de café est destinée à une ou plusieurs tasses de café crème et que la capacité de la chambre de traitement est indépendante de celle d'une tasse de café crème. Toujours conformément à l'invention, il est prévu que toutes les dispositions pour mettre en oeuvre, en séquence, les phases correspondantes du procédé sont dérivées d'un unique organe de commande.

Pour ce qui concerne le dispositif pour mettre en oeuvre ledit procédé, conformément à l'invention, il comprend:
A) des moyens pour former une dose prédéterminée de café lyophilisé, avec un chargeur 1, ouvert en correspondance des bases inférieure et supérieure, qui est solidiaire avec un corps 10 coulissant dans une voie 2 de déplacement horizontal, d'une position de chargement du café, qui est approvisionné par gravité à partir d'un réservoir 3 situé au-dessus, à une position de déchargement par gravité, dans une chambre de traitement 4 du café située au-dessous, et dont la course de déplacement est obtenue, au moyen d'une bielle 5, à partir du mouvement d'ouverture/fermeture du couvercle 6 de la chambre de traitement. Ledit corps 10 est fermé dans sa partie supérieure pour obturer l'embouchure 30 du réservoir 3 du café pendant la course du chargeur 1, aller vers et retour de la chambre de traitement 4, et en outre, il est associé à une plaque inférieure 11 qui lui est reliée et qui coulisse pour obturer, par le bas, le chargeur 1 pendant sa course, sauf dans la position de déchargement du café dans la chambre de traitement 4. Au-dessus du chargeur 1 et dans l'axe de ladite chambre de traitement 4, est prévu un diffuseur 48 d'air chaud à flux descendant, ayant pour fonction de nettoyer les parois internes du chargeur 1 après son vidage et avec comme fonction supplémentaire de réchauffer lesdites parois de manière à empêcher la formation d'eau de condensation sur celles-ci;
B) des moyens pour dissoudre et mélanger la dose prédéterminée de café lyophilisé avec du lait émulsionné, avec: une chambre de traitement 4 du café, laquelle est pourvue d'un couvercle 6 à rotation vers le haut, avec une voie de sortie 60 du café crème en formation, une ouverture inférieure 41 de vidage avec soupape de retenue 7, une ouverture latérale 40 pour l'amenée du lait et de l'aair au moyen de vapeur d'eau sous pression. Il est prévu que ladite ouverture de vidage 41 débouche dans un canal 42 qui se prolonge dans tube 43 pour la distribution du café crème dans une tasse et que dans ladite ouverture 41 débouche également un tuyau flexible 61 relié à ladite voie de sortie 60 du couvercle 6 pour l'amenée du café crème en formation. Ledit couvercle 6 pivote, pour l'ouverture et respectivement pour la fermeture, sous l'action d'une came négative 20, c'est-à-dire obtenue par dépression, dans un disque 13 qui peut tourner autour d'un axe horizontal sous la commande d'une poignée 13′ fixée dessus; ladite soupape 7 est commandée à la fermeture et respectivement à l'ouverture, par un ressort 70 et par un levier 71 asservi à une came positive 21 du disque 13: ledit levier 71 étant maintenu, dans la position de soupape 7 fermée, par un autre levier 72 asservi à une came positive 23 correspondante du disque 13;
C) des moyens pour amener dans la chambre de traitement du café, le lait de solution et l'air d'émulsion, comprenant une chambre d'aspiration 8, communicante avec ladite chambre de traitement 4 et dans laquelle débouchent un conduit 80 de la vapeur d'eau sous pression, un conduit 9 du lait et un conduit 100 pour l'air d'emulsion. La vapeur sous pression, fournie par une chaudière (non représentée sur le dessin), est injectée dans ladite chambre d'aspiration 8 à travers une buse 81 qui est mis en communication avec un cylindre opérateur 82 au moyen d'une soupape 83, laquelle est ouverte par le piston de ce même cylindre 82 lorsque celui-ci est activé avec l'ouverture de la soupape 84 d'entrée de la vapeur, sous l'action d'un levier 85 asservi à une came 24 du disque 13.
   Le lait est rappelé dans ladite chambre d'aspiration 8 à travers une buse calibrée 86, reliée à un tube oscillant 87 qui trempe dans un récipient 88, dès que la soupape 89 d'entrée dans ladite chambre d'aspiration 8 est ouverte par le même levier 85 qui actionne la soupape d'entrée 84 de la vapeur sous pression: l'oscillation dudit tube 87, d'une position horizontale de repos, hors du lait, à une position verticale dans laquelle il trempe dans le lait, étant obtenue à partir d'une came 25 du disque des déplacements 13.
   Enfin, l'air ambiant est rappelé dans ladite chambre d'aspiration 8 à travers un conduit 100 délimité par un planage pratiqué sur la surface externe du pied creux 87′ dudit tube 87.
   Il va de soi que ledit conduit 100 pour l'air peut être enclavée pour obtenir le café crème sans mousse;
D) des moyens pour démarrer et arrêter le dispositif en l'absence de vapeur d'eau sous pression, comprenant une targette 14 asservie à un ressort 16 et associée à la tige d'un cylindre opérateur 15 qui est activé par cette même vapeur d'eau sous pression de manière que, avec le cylindre 15 déchargé, l'extrémité libre de la targette 14, sous l'action du ressort 16, s'engage dans une enclenche correspondante 91 du disque 13 en bloquant la rotation de la poignée de commande 13′, et, avec le cylindre 15 en pression, la targette 14 revient en arrière en libérant ledit disque 13 et la poignée de commande 13′ correspondante.

Le dispositif décrit et illustré, de par la présence de la poignée 13′, est du type semi-automatique, mais tout homme du métier sait bien que l'actionnement du disque 13 des mouvements du dispositif peut être automatisé avec des moyens connus simples.

Le fonctionnement est le suivant. Au début de chaque cycle, le cylindre 15 est en pression, le disque 13 est libéré de la targette 14, mais il est retenu par une dent 92 logé dans l'encoche correspondante 93, la soupape de vidage 7 de la chambre 4 est ouverte et l'introduction de vapeur, de lait et d'air est bloquée. En tournant la poignée 13′ dans le sens de aiguilles d'une montre d'environ 80°, le couvercle 6 de la chambre 4 se soulève, la soupape 7 se ferme, le doseur 1 avance et verse la dose de café en granulés dans la chambre 4; ensuite, on tourne la poignée 13′ dans le sens contraire des aiguilles d'une montre d'environ 160° de manière à ce que le couvercle 6 s'abaisse en fermant la chambre 4, le tube 87 pivote de 90° vers le bas, le levier 85 ouvre la soupape 89 du conduit 9 du lait et le même levier 85 ouvre la soupape 84 d'entrée de la vapeur de sorte que, une fois le cylindre 82 activé et la buse 81 ouverte vers la chambre d'aspiration 8, elle atteint la chambre de traitement 4 en aspirant à l'intérieur le lait au moyen du tube 87 et l'air à travers le conduit 100.

Au fur et à mesure que le lait arrive dans la chambre de traitement 4, il s'émulsionne avec l'air et dissoud progressivement les granulés de café en produisant du café crème en quantité croissante et ce dernier, une fois la chambre de traitement 4 remplie, sort à travers la sortie 60 prévue dans le couvercle 6 et communicante avec le tube 43 de distribution dans la tasse. Lorsque la quantité de café crème recueillie dans la tasse est celle désirée, on tourne la poignée 13′ dans le sens des aiguilles d'une montre d'environ 160°, c'est-à-dire jusque dans la position initiale, de manière à bloquer l'amenée de la vapeur, du lait et de l'air et à ouvrir la soupape de vidage 7 de la chambre de traitement 4, c'est-à-dire en rétablissant les conditions de début de cycle.

## Revendications

1. Procédé pour obtenir une dose de boisson chaude de solution, spécialement de café crème avec mousse, comportant la formation d'une dose prédéterminée de café lyophilisé, le chargement de ladite dose dans une chambre de traitement, l'alimentation de ladite chambre de traitement avec un liquide de solution, la vidange de ladite chambre de traitement de la boisson obtenue et la collecte de cette boisson dans une tasse, caractérisé en ce qu'il comprend les phases suivantes:
- alimenter la chambre de traitement avec du lait pour dissoudre à chaud le café lyophilisé et avec de l'air pour émulsionner la solution obtenue dans cette chambre;
- aspirer le lait de solution et l'air d'émulsion dans la chambre de traitement au moyen de vapeur d'eau sous pression;
- régler le débit de la vapeur d'eau et ainsi l'alimentation dans la chambre de traitement du lait de solution et de l'air d'émulsion pour obtenir la quantité et la température appropriées pour la dose de boisson à obtenir.

2. Dispositif pour obtenir une dose de boisson chaude de solution, spécialement du café crème avec mousse, suivant le procédé selon la revendication 1 et comprenant des moyens pour former une dose prédéterminée de café lyophilisé, une chambre (4) de traitement du café lyophilisé et des moyens pour alimenter le liquide de solution dans la chambre de traitement, caractérisé en ce que:
- lesdits moyens pour former une dose prédéterminée de café lyophilisé comprennent un chargeur (1) en forme de boîte ouverte vers le haut et vers le bas, de contenance égale à ladite dose de café lyophilisé et coulissant sur une voie (2) entre une position de chargement au-dessous d'un réservoir (3) du café lyophilisé et une position de déchargement au-dessus de ladite chambre de traitement (4) du café, dont la course aller/retour est dérivée, au moyen d'une bielle (5), du mouvement d'ouverture/fermeture du couvercle (6) de cette même chambre de traitement (4);
- en ce que ladite chambre de traitement (4) est munie d'un couvercle (6) avec rotation verticale, pourvue d'une voie de sortie (60) pour la boisson en formation et d'une ouverture inférieure (41) avec une soupape de retenue (7) pour le vidage;
- en ce que lesdits moyens pour alimenter le liquide de solution dans la chambre de traitement (4) comprennent une chambre d'aspiration (8) dans laquelle débouchent un conduit (80) de la vapeur d'eau sous pression, un conduit (9) du lait de solution et un conduit (100) pour l'air d'émulsion, et laquelle chambre (8) communique, d'un côté, avec la chambre de traitement (4) et, de l'autre côté, avec un cylindre opérateur (82) avec interposition d'une soupape (83) qui est ouverte par ce même cylindre opérateur (82) lorsque celui-ci est activé par la vapeur d'eau sous pression et en ce qu'il comprend, en outre, un disque (13) muni de plusieurs cames (20,21,22,25) et tournant autour d'un axe horizontal au moyen d'une poignée (13′) pour l'entraînement des parties en mouvement et de manière que la rotation du disque (13) entraine l'accomplissement d'un cycle de fonctionnement du dispositif.

3. Dispositif selon la revendication 2, caractérisé en ce qu'audit chargeur (1) sont associés un corps (10), solidaire avec celui-ci, fermé par le haut, lequel est destiné à obturer l'embouchure (30) du réservoir (3) du café lyophilisé pendant les déplacements du chargeur (1) et une plaque inférieure (11) coulissant de manière à obturer l'ouverture du chargeur (1) pendant ses déplacements, mais pas dans la position de déchargement du café lyophilisé dans la chambre de traitement (4).

4. Dispositif selon la revendication 2, caractérisé en ce que ladite soupape (7) de vidange de la chambre de traitement (4) est commandée à la fermeture et respectivement à l'ouverture, par un levier (71) qui est actionné par un ressort (70) et respectivement par un levier (72): ledit levier (71) étant rendu libre par une came (21) dudit disque (13) et ledit levier (72) étant asservi à la came (23) du disque (13).

5. Dispositif selon la revendication 2, caractérisé en ce qu'à ladite chambre de traitement (4) et en axe avec celle-ci est associé un diffuseur (48) d'air chaud, disposé à un niveau supérieur à celui du chargeur (1) de manière à engendrer un courant descendant destiné à nettoyer et à réchauffer les parois internes du chargeur (1) après son déchargement dans la chambre (4) de traitement.

6. Dispositif selon la revendication 2, caractérisé en ce que ledit conduit (100) d'amenée de l'air dans la chambre d'aspiration (8) est pratiqué dans la surface externe du pied (87') dudit tube (87).

7. Dispositif selon la revendication 2, caractérisé en ce que la rotation dudit couvercle (6) de la chambre (4) de traitement est dérivée de la came (20) du disque (13).

8. Dispositif selon la revendication 2, caractérisé en ce que ledit conduit (9) d'aspiration du lait de solution est pourvu d'un tube (87) qui est oscillant entre une position horizontale de repos hors du liquide et une position verticale où il trempe dans le liquide et coïncidente avec l'ouverture de la soupape (89) d'une buse calibrée (86) d'introduction du liquide dans ladite chambre d'aspiration (8): l'oscillation du tube (87) étant commandée par la came (25) du disque (13).

9. Dispositif selon la revendication 2, caractérisé en ce qu'au disque (13) des déplacements est associé une targette (14) de blocage, laquelle est asservie à un ressort de rappel dans la position de blocage et respectivement à un cylindre opérateur (16) activé par cette même vapeur d'eau sous pression pour l'aspiration du lait et de l'air dans la chambre de traitement (4) de manière que la targette (14) est en position de blocage du disque (13) lorsque le cylindre (15) est déchargé et respectivement est en position de déblocage du disque (13) lorsque le cylindre (5) est en pression.

10. Dispositif selon la revendication 2, caractérisé en ce que ledit disque des déplacements (13) est maintenu dans la seule position d'inactivité au moyen d'un élément d'arrêt (92) élastique dont l'extrémité libre s'engage dans une encoche correspondante (93) dudit disque (13).

## Patentansprüche

1. Verfahren zum Herstellen einer Portion eines heißen Lösungsgetränkes, insbesondere Café Crème mit Schaum, umfassend die Bildung einer vorgegebenen Portion von gefriergetrocknetem Kaffee, Einfüllen dieser Portion in eine Verarbeitungskammer, Versorgen dieser Verarbeitungskammer mit einer Lösungflüssigkeit, Ausleeren des erhaltenen Getränkes aus dieser Verarbeitungskammer und Sammeln dieses Getränkes in einer Tasse, dadurch **gekennzeichnet,** daß es die folgenden Schritte umfaßt:
- Versorgen der Verarbeitungskammer mit Milch zum Heißlösen des gefriergetrockneten Kaffees und mit Luft zum Emulgieren der erhaltenen Lösung in dieser Kammer;
- Ansaugen der Lösungsmilch und der Emulgierluft in die Verarbeitungskammer mittels Wasserdampf unter Druck;
- Regeln der Zuliefermenge des Wasserdampfes und damit der Zuführung der Lösungsmilch sowie der Emulgierluft in die Verarbeitungskammer derart, daß man die passende Menge und Temperatur für die herzustellende Getränkeportion erhält.

2. Einrichtung zum Herstellen einer Portion eines heißen Lösunggetränkes, insbesondere Café Crème mit Schaum, nach dem Verfahren gemäß Anspruch 1, umfassend Mittel zum Bilden einer vorgegebenen Portion von gefriergetrocknetem Kaffee, eine Kammer (4) zum Verarbeiten des gefriergetrockneten Kaffees und Mittel zum Zuführen der Lösungsflüssigkeit in die Verarbeitungskammer, dadurch **gekennzeichnet,** daß
- die Mittel zum Bilden einer vorgegebenen Portion von gefriergetrocknetem Kaffee ein Füllelement (1) in Form einer nach oben und unten offenen Büchse mit einem Aufnahmeinhalt gleich der Portion von gefriergetrocknetem Kaffee umfassen, welches auf einer Schiene (2) zwischen einer Beladeposition unterhalb eines Behälters (3) für den gefriergetrockneten Kaffee sowie einer Entladeposition oberhalb der Verarbeitungskammer (4) für den Kaffee verschiebbar ist und dessen Hin- und Rückweg vermittels einer Schubstange (5) von der Öffnungs-Schließbewegung des Deckels (6) eben dieser Verarbeitungskammer (4) abgeleitet ist;
- daß die Verarbeitungskammer (4) mit einem Deckel (6) mit vertikaler Drehbewegung ausgestattet ist, welcher mit einem Auslaßkanal (60) für das in Herstellung befindliche Getränk versehen ist, sowie mit einer unteren Öffnung (41) mit einem Rückschlagventil (7) für die Entleerung;
- daß die Mittel zum Zuführen der Lösungsflüssigkeit in die Verarbeitungskammer (4) eine Ansaugkammer (8) umfassen, in die eine Leitung (80) für den Wasserdampf unter Druck mündet, ferner eine Leitung (9) für die Lösungsmilch und eine Leitung (100) für die Emulgierluft, wobei diese Kammer (8) an einer Seite mit der Verarbeitungskammer (4) und an der anderen Seite mit einem Betätigungszylinder (82) unter Zwischenschaltung eines Ventils (83) in Verbindung steht, welches durch diesen Betätigungszylinder (82) geöffnet wird, wenn dieser durch den Wasserdampf unter Druck aktiviert wird, und daß sie außerdem eine Scheibe (13) umfaßt, die mit mehreren Nocken (20, 21, 22, 25) ausgestattet ist und sich um eine horizontale Achse vermittels eines Handgriffes (13′) dreht, um die bewegten Teile anzutreiben derart, daß die Drehung der Scheibe (13) die Vollendung eines Funktionszyklus der Einrichtung bewirkt.

3. Einrichtung nach Anspruch 2, dadurch **gekennzeichnet,** daß dem Füllelement (1) ein mit diesem fest verbundener, von oben verschlossener Körper (10) zugeordnet ist, welcher dazu bestimmt ist, das Mundstück (30) des Behälters (3) für den gefriergetrockneten Kaffee während der Verschiebebewegungen des Füllelementes (1) zu verschließen, sowie eine untere Platte (11), die sich so verschiebt, daß sie die Öffnung des Füllelementes (1) während dessen Verschiebe bewegungen, nicht jedoch in der Position zum Entladen des gefriergetrockneten Kaffees in die Verarbeitungskammer (4) verschließt.

4. Einrichtung nach Anspruch 2, dadurch **gekennzeichnet,** daß das Ventil (7) für die Entleerung der Verarbeitungskammer (4) zum Schließen bzw. zum Öffnen durch einen Hebel (71) gesteuert wird, welcher von einer Feder (70) bzw. von einem Hebel (72) betätigt wird: wobei dieser Hebel (71) von einem Nocken (21) der Scheibe (13) freigegeben wird und der Hebel (72) von dem Nocken (23) der Scheibe (13) angesteuert wird.

5. Einrichtung nach Anspruch 2, dadurch **gekennzeichnet,** daß der Verarbeitungskammer (4) in axialer Ausrichtung zu dieser ein Diffusor (48) für Heißluft zugeordnet ist, welcher in einer gegenüber der des Füllelementes (1) höheren Lage angeordnet ist derart, daß eine Abwärtsströmung erzeugt wird, die dazu dient, die Innenwände des Füllelementes (1) nach dessen Entleerung in die Verarbeitungskammer (4) zu reinigen und wieder aufzuwärmen.

6. Einrichtung nach Anspruch 2, dadurch **gekennzeichnet,** daß die Leitung (100) zum Zuführen von Luft in die Ansaugkammer (8) in der Außenfläche des Fußes (87′) dieses Rohres (87) ausgebildet ist.

7. Einrichtung nach Anspruch 2, dadurch **gekennzeichnet,** daß die Drehbewegung des Deckels (6) für die Verarbeitungskammer (4) von dem Nocken (20) der Scheibe (13) abgeleitet wird.

8. Einrichtung nach Anspruch 2, dadurch **gekennzeichnet,** daß die Leitung (9) zum Ansaugen der Lösungsmilch mit einem Rohr (87) versehen ist, welches zwischen einer horizontalen Ruhestellung außerhalb der Flüssigkeit und einer vertikalen Stellung schwenkbar ist, bei der es in die Flüssigkeit eintaucht und mit der Öffnung des Ventils (89) einer kalibrierten Einführdüse (86) für die Flüssigkeit in diese Ansaugkammer (8) in Deckung ist: die Schwenkbewegung (87) wird durch den Nocken (25) der Scheibe (13) gesteuert.

9. Einrichtung nach Anspruch 2, dadurch **gekennzeichnet,** daß der Scheibe (13) für die Verschiebebewegungen ein Blockierriegel (14) zugeordnet ist, welcher der Wirkung einer Feder zum Zurückstellen in die Blockierposition bzw. eines Betätigungszylinders (16) unterworfen ist, der durch diesen gleichen Wasserdampf unter Druck zum Ansaugen der Milch und der Luft in die Verarbeitungskammer (4) aktiviert wird derart, daß der Riegel (14) sich in einer Position zum Blockieren der Scheibe (13) befindet, wenn der Zylinder (15) entlastet ist, bzw. sich in einer Position zur Freigabe der Scheibe (13) befindet, wenn der Zylinder (5) unter Druck steht.

10. Einrichtung nach Anspruch 2, dadurch **gekennzeichnet,** daß die Scheibe (13) für die Verschiebebewegungen in der einzigen Außerbetriebsposition mittels eines elastischen Arretierelementes (92) gehalten wird, dessen freies Ende in eine entsprechende Ausnehmung (93) dieser Scheibe (13) einrastet.

## Claims

1. Process for obtaining a dose of hot drink solution, especially café crème with foam, consisting of producing a predetermined dose of freeze-dried coffee, loading the said dose into a treatment chamber, feeding the said treatment chamber with a solution liquid, emptying the said treatment chamber of the drink obtained and collecting this drink in a cup, characterized in that it contains the following phases:
- Feeding the treatment chamber with milk to dissolve the freeze-dried coffee when hot and with air to emulsify the solution obtained in this chamber;
- Sucking the solution milk and the emulsifying air into the treatment chamber by means of steam under pressure;
- Controlling the flow of steam and thus feeding solution milk and emulsifying air into the treatment chamber to obtain the appropriate quantity and temperature for the dose of the drink to be obtained.

2. Device to obtain a dose of hot drink solution, especially of café crème with foam, according to the process of Claim 1 and containing the means to produce a predetermined dose of freeze-dried coffee, a treatment chamber (4) for freeze-dried coffee and means for feeding the solution liquid into the treatment chamber, characterized by the fact that:
- the said means for producing a predetermined dose of freeze-dried coffee consisting of a loader (1) in the form of a box open upwards and downwards, of capacity equal to the said dose of freeze-dried coffee and sliding on a track (2) between a loading position below a reservoir (3) of freeze-dried coffee and an unloading position above the said coffee treatment chamber (4), where the go/return movement is derived, by means of a connecting rod (5) from the opening/closing movement of the cover (6) of the same treatment chamber (4);
- The said treatment chamber (4) is fitted with a cover (6) with vertical rotation, provided with an outlet (60) for the drink being produced and a lower opening (41) with a non-return valve (7) for emptying it;
- the said means for feeding the solution liquid into the treatment chamber (4) consisting of an intake chamber (8) into which a pipe (8) for steam under pressure, a duct (9) for milk solution and a duct (100) for emulsifying air open, and where the chamber (8) communicates on one side with the treatment chamber (4) and on the other side with the operating cylinder (82) with an interposed valve (83), which is opened by the same operating cylinder (82) when it is actuated by the steam under pressure and which also contains a disk (13) fitted with several cams (20, 21, 22, 25) and turning around an horizontal axis by means of a handle (13′) for setting the parts into motion in such a way that the rotation of the disk (13) achieves the completion of one operating cycle of the device.

3. Device according to Claim 2, characterized in that the said loader (1) has associated and in one piece with it a body (10), closed from above, which is intended to close the opening (30) of the reservoir (3) of freeze-dried coffee during movement of the loader (1) and a lower plate (11) sliding in such a way as to close the opening of the loader (1) during its movement, but not in the unloading position of the freeze-dried coffee into the treatment chamber (4).

4. Device according to Claim 2, characterized in that the said emptying valve (7) of the treatment chamber (4) has its closing and opening controlled by a spring (70) and a lever (72) respectively; the said lever (71) being freed by a cam (21) of the said disk (13) and the said lever (72) being operated by cam (23) of the disk (13).

5. Device according to Claim 2, characterized in that the said treatment chamber (4) and a spindle with which a diffuser (48) of hot air is associated are at a level higher than that of the loader (1) in such a way as to produce a descending flow intended to clean and heat the internal walls of the loader (1) after it has discharged into the treatment chamber (4).

6. Device according to Claim 2, characterized in that the said duct (100) for supplying air to the intake chamber (8) is fitted into the external surface of the foot (87′) of the said tube (87).

7. Device according to Claim 2, characterized in that the rotation of the said cover (6) of the treatment chamber (4) is derived from cam (20) of the disk (13).

8. Device according to Claim 2, characterized in that the said intake duct (9) for solution milk is provided with a tube (87) which oscillates between a horizontal rest position outside the liquid and coinciding with the opening of the valve (89) of a calibrated nozzle (86) for introducing the liquid into the said intake chamber (8); the oscillation of the tube (87) being controlled by the cam (25) of the disk (13).

9. Device according to Claim 2, characterized in that a locking bolt (14) associated with the disk (13), which operated by a return spring in the locking position and an operating cylinder (16) operated by the steam under pressure for sucking in milk and air into the treatment chamber (4) in such a way that the bolt (14) is in the position locking the disk (13) when the cylinder (15) is discharged and is in the unlocked position of the disk (13) when the cylinder (5) is under pressure.

10. Device according to Claim 2, characterized in that the said movement disk (13) is maintained in the only inactive position by means of an elastic stopping part (92) where the free end engages in a corresponding opening (93) of the said disk (13).
